# EUROPÄISCHE PATENTSCHRIFT

(11) **EP 0 833 986 B1**
(45) Veröffentlichungstag und Bekanntmachung des Hinweises auf die Patenterteilung: **06.03.2002**
(21) Anmeldenummer: 96918592.5
(22) Anmeldetag: 20.06.1996
(51) Int. Cl.: E02B 15/04

(54) **ÖLBARRIERE MIT ÜBERSCHWAPPSICHERUNG**
OIL RETENTION BARRIER WITH ANTI-SPLASHING MEANS
BARRIERE DE CONFINEMENT DE PETROLE A DISPOSITIF ANTI-DEBORDEMENT

(30) Priorität: 23.06.1995 DE 19522532
(43) Veröffentlichungstag der Anmeldung: 08.04.1998
(73) Patentinhaber: Schiwek, Helmut, 47057 Duisburg (DE)
(72) Erfinder: Schiwek, Helmut, 47057 Duisburg (DE)
(74) Vertreter: Schulte, Jörg, Dipl.-Ing.
(86) Internationale Anmeldenummer: DE9601086
(87) Internationale Veröffentlichungsnummer: WO9701004

(56) Entgegenhaltungen:
- DE-A- 4 325 806
- GB-A- 2 045 172
- US-A- 3 590 584
- US-A- 3 744 254
- US-A- 4 610 794
- PATENT ABSTRACTS OF JAPAN vol. 10, no. 14 (M-447) [2071] , 21.Januar 1986 & JP,A,60 175615 (BRIDGESTONE K.K.), 9.September 1985,

## Beschreibung

Die Erfindung betrifft eine Ölbarriere, die auf dem Wasser zur Eindämmung von Öl oder ölähnlichen Stoffen aufschwimmt, bestehend aus auf dem Wasser aufschwimmenden größeren Teilzellen aus hydrophobiertem Material und ins Wasser eingetauchten kleineren Teilzellen aus unbehandeltem oder hydrophiel gemachten und bzg1. der Barriere lagerstabilisierend wirkende Material, wobei die Teilzellen aus Glasfasern bzw. Glasfasermatten und einem sie umhüllenden Schlauch bestehen und unmittelbar oder über Zugseile aneinander gekoppelt sind.

Mit immer größer werdenden Öltransportern wird auch die Gefährdung der Umwelt durch auslaufendes Öl immer größer. Im Rahmen von Ölkatastrophen der letzten Jahre sind ganze Küstenstriche so stark verunreinigt und auch das Leben im Meer unter den gefährdeten Bereichen so weit vernichtet worden, daß den großen Schiffen immer mehr Auflagen gemacht werden. So hat man versucht, mehrbandige Tanker zu bauen, um das Auslaufen von Öl zu erschweren. Abgesehen von Herstellungsproblemen ist aber durch solche Maßnahmen letztlich insbesondere beim Untergang von Schiffen das Auslaufen von Öl nicht zu vermeiden. Aus der FR-A-2 646 189 ist es bekannt, hydrophobierte Mineralfasern auf die Wasseroberfläche zu blasen. An diese Fasern soll sich das Öl anlagern, so daß die Masse dann insgesamt aufgenommen und entsorgt werden kann. Die Fasern sind mit Silikonöl hydrophobiert, wobei aufgrund der kurzen Fasern ein Absinken dieser Fasern nicht vermieden werden kann. Eine Verseuchung und Verschmutzung des Meeresgrundes ist so problematisch, daß derartige Mineralfasern nicht eingesetzt werden. Aus der GB-A-1 235 463 ist ein Verfahren bekannt, bei dem das auf dem Wasser aufliegende Öl über anorganische Fasern aufgenommen werden soll, wobei die Fasern vorher mit einem wasserabstoßendem Material versehen sind. Die Fasern schwimmen demnach auf dem Öl und führen zum Anlagern des Öls, das dann durch Abbrennen von den Fasern wieder entfernt werden soll. Das Abbrennen des von den Fasern aufgenommenen Öls ist volkswirtschaftlich nicht vertretbar und führt darüber hinaus zu einer erheblichen Umweltbelastung. Darüber hinaus ist das Speichervermögen der einfach auf das Wasser aufgesprühten Fasern zu gering. Die DE-C-41 40 247 beinhaltet den Vorschlag, derart hydrophobierte Glaswollematerialien zu einer Barriere zusammenzufügen, indem diese Glasfasern in einen perforierten Schlauch eingegeben werden. Durch die Perforation kann das Öl in den Schlauch und in die Glaswolle eintreten, wo das Öl dann entsprechend gebunden und so lange festgehalten wird, bis die Barriere vom Wasser abgenommen und entsorgt ist. Nachteilig dabei ist, daß der Öladsorber bzw. die entsprechende Barriere oben auf der Wasseroberfläche aufschwimmt, so daß damit bei Wellengang das Durchtreten von Öl nicht ausreichend verhindert ist. Dementsprechend schlägt die DE-A-43 25 806 vor, einen mehrteiligen Öladsorber einzusetzen, bei dem eine Zelle mit hydrophobiertem und die andere untenliegende mit nicht hydrophobiertem Material beschickt sind. Die obere mit hydrophiertem Glasfasermaterial beschickte Teilzelle schwimmt oben auf dem Wasser und kann Öl aufnehmen, während die untere oder mehrere untere Teilzellen in das Wasser eingetaucht sind, weil sie das Wasser aufgrund ihrer besonderen Ausbildung quasi anziehen. Sie wirken als eine Art Schwert, die das Durchtreten des Öls bei Wellengang weitgehend verhindert. In die zusammengefügten Teilzellen integriert ist ein Zugseil, über das die Barriere gehändelt werden kann. Insbesondere ist so die Möglichkeit gegeben, die Barriere, die eine entsprechende große Öllache einfaßt, zum Schiff zurückzuziehen und dabei kontinuierlich das auf dem Wasser aufschwimmende Öl abzuschöpfen bzw. durch entsprechende Glasfasermatten abzubinden. Beim Einholen der Ölbarriere aber auch bei entsprechender Windbelastung ist aber auch bei dieser Art von Ölbarriere leider nicht zu vermeiden, daß sich das aufgestaute Öl quasi über die Ölbarriere ergießt und dann doch wieder in den nicht geschützten Meeresbereich bzw. Bereich der Wasseroberfläche gelangt. Teilweise bilden sich auch Wirbel, die letztlich sogar dazu führen, daß das Öl auch noch unter dem Schwert durchgeführt wird und von dort aus in die ölfreie Wasseroberfläche austritt.

Der Erfindung liegt daher die Aufgabe zugrunde, eine Ölbarriere zu schaffen, die bei Windbelastung, insbesondere aber beim Einholen ein Überschwappen des Öls oder des ölhaltigen Wassers unterbindet und damit auch ein unter dem Schwert Hindurchdringen des Öls.

Die Aufgabe wird gemäß der Erfindung dadurch gelöst, daß eine der größeren, aufschwimmenden Teilzellen den weiteren größeren Teilzellen und den kleineren, ins Wasser abgesenkten, öldicht aneinanderliegenden Teilzellen schmutzwasserseitig vorgeordnet, am Zugseil fixiert und über Abstandshalter einen Spülkanal zwischen den aufschwimmenden und abgesenkten Teilzellen belassend mit ihnen verbunden ist.

Aufgrund der besonderen Ausbildung wird somit innerhalb der Barriere ein Kanal vorgegeben, durch den die beim Einholen der Barriere auftretende Strömung geschickt abgelenkt wird. Die Strömung wird quasi im Kreis geführt, d.h. der Druck wird dadurch abgebaut, daß das ölhaltige Wasser oder auch das reine Öl über die vorgeordnete Teilzelle hinweg in den Schumtzwasserbereich zurückgebracht wird. Dadurch wird der Druck abgebaut und es ist problemlos möglich, eine solche Ölbarriere beispielsweise vom Lande aus oder vom Bergungsschiff aus einzuholen und dabei das Öl abzusaugen oder wie schon erwähnt durch aufgebrachte Glasfasermatten so abzufangen, daß eine Rückgewinnung des Öls möglich wird. Überraschend dabei ist, daß nicht nur ein Überschwappen des Öls so verhindert werden kann, sondern gleichzeitig auch das Hindurchdringen des Öls unter der Barriere. Gleichzeitig wird so ein Staudruck abgebaut bzw. ganz vermieden, so daß auch das Einholen der Ölbarriere insgesamt erleichtert ist. Durch diesen Mehrfacheffekt ist das Händeln der Ölbarriere wesentlich erleichtert, wobei die hydrophobierten Teilzellen problemlos nach wie vor Öl aufnehmen, so daß ihre Schwimmfähigkeit gezielt verbessert ist.

Nach einer zweckmäßigen Ausbildung der Erfindung ist vorgesehen, daß zwei aufschwimmende Teilzellen und zwei abgesenkte Teilzellen gegenüber dem Öl abdichtend miteinander quasi eine Zeile bildend verbunden sind, während die vorgeordnete und ans Zugseil angekoppelte Teilzelle mit der oberen aufschwimmende Teilzelle und der oberen abgesenkten Teilzelle über Abstandshalter in Verbindung steht. Die beiden untereinander und unter den beiden aufschwimmenden Teilzellen angeordneten abgesenkten Teilzellen bilden auch hier wieder den Kiel bzw. das entsprechende Schwert, das eine Unterströmung vermeidet und gezielt dazu beiträgt, daß der Spülkanal entsprechend als Entlastungskanal wirken kann. Dabei wird die gesamte Ölbarriere über das Zugseil eingeholt, das mit der vorgeordneten Teilzelle und zwar der aufschwimmenden Teilzelle verbunden ist. So ist eine gleichmäßige Bewegung der Ölbarriere gesichert, wobei das unten ins Wasser hineinreichende Schwert aus den beiden abgesenkten Teilzellen aufgrund seiner Eigenschaft für die Lagestabilität der "Zeile" sorgt.

Eine weitere zweckmäßige Weiterbildung sieht vor, daß das Zugseil schmutzwasserseitig an der vorgeordneten Teilzelle festgelegt ist. Dies war weiter vorn schon erwähnt, wobei diese Zuordnung des Zugseils mit dafür sorgt, daß der zwischen den einzelnen Teilzellen gebildete Ölkanal auch wirklich frei und offen bleibt.

Um sicherzustellen, daß das durch die beiden abgesenkten Teilzellen gebildete Schwert auch wirksam bleibt, ist es vorteilhaft, wenn die untere abgesenkte Teilzelle zusätzlich über ein verlängertes Halteseil mit der vorgeordneten Teilzelle verbunden ist. Die vorgeordnete Teilzelle, an der das Zugseil befestigt ist, zieht somit das Schwert, das von den beiden abgesenkten Teilzellen gebildet ist, mit, wobei über das Halteseil dafür Sorge getragen ist, daß der Abstand zwischen beiden Arten von Teilzellen immer erhalten bleibt. Die besondere Anordnung bildet einen trichterförmigen Einlauf für den Spülkanal, so daß dessen Wirksamkeit gezielt gewährleistet ist.

Bei Versuchen hat sich herausgestellt, daß es eine besondere wirksame Barriere darstellt, wenn die aufschwimmende Teilzellen einen Durchmesser von 100 - 300 mm, vorzugsweise 150 mm und die abgesenkten Teilzellen einen Durchmesser von 50 - 150 mm, vorzugsweise 75 mm aufweisen. Damit ergibt sich eine im Volumen bzw. im Durchmesser ausreichend große Gesamtbarriere, die bei üblichen Ölunfällen ausreicht, um ein Überschwappen des Öls zu verhindern. Gleichzeitig ist so das Einholen der Ölbarriere über das Zugseil sichergestellt.

Bei einer weiteren Ausbildung der Erfindung ist vorgesehen, daß eine weitere abgesenkte Teilzelle über Abstandshalter mit der vorgeordneten Teilzelle verbunden und ein weiteres Zugseil an der unteren abgesenkten Teilzelle angebracht ist, die ebenso wie die obere, abgesenkte Teilzelle über keine Verbindung zur vorgeordneten Teilzelle verfügt. Diese Ausbildung führt zu einer gewissen verbesserten Lagestabilität der vorgeordneten aufschwimmenden Teilzelle, weil die entsprechend "schwere" zusätzliche abgesenkte Teilzelle dafür Sorge trägt. Da diese Teilzelle über einen Abstandshalter mit der aufschwimmenden vorgeordneten Teilzelle verbunden ist, kann hier das Öl abgeführt und in den Spülkanal hineingeleitet werden, wobei das zusätzliche Zugseil an der nachgeordneten Teilbarriere der beiden abgesenkten Teilzellen die Schwertwirkung sichert, die weiter vorne schon mehrfach erläutert worden ist. Insgesamt gesehen, bietet auch diese Ausbildung die notwendige Sicherheit, daß das durch den Staudruck nach oben drückende Öl bzw. das Wasserölgemisch durch den Spülkanal druckmindernd und vorteilhaft abgeleitet werden kann.

Die durch den Spülkanal vorgegebene Bewegungsrichtung für das aufschwimmende Öl wird noch dadurch begünstigt, daß gemäß einer Weiterbildung der Erfindung zumindest die vorgeordnete, aufschwimmende Teilzelle einen kreisrunden Querschnitt aufweist. Möglich ist auch ein ovaler Querschnitt, wobei dann die vorgeordnete, aufschwimmende Teilzelle zweckmäßigerweise mit der flacheren Seite auf das Wasser aufgelegt werden sollte. Wichtig dabei ist, daß das Öl durch den Spülkanal quasi in eine bestimmte Richtung hineingesaugt bzw. geführt wird, um so den nachteiligen Staudruck zu vermeiden.

Schließlich ist es auch möglich, die obere und die untere aufschwimmende Teilzelle mit der vorgeordneten Teilzelle über Abstandshalter zu verbinden, wobei beide eine angekoppelte abgesenkte Teilzelle aufweisen. Die beiden abgesenkten Teilzellen wirken stabilisierend, wobei die der vorgeordneten aufschwimmenden Teilzelle zugeordnete abgesenkte Teilzelle über eine Abstandshalter angekoppelt ist, um auf diese Art und Weise hier schon den Spülkanal mit vorzugeben, wie auch bei der weiter vorne beschriebenen Ausführung.

Die hier beschriebene Ausbildung der Ölbarriere kann weiter dadurch optimiert werden, daß die der vorgeordneten Teilzelle über einen Abstandshalter zugeordnete abgesenkte Teilzelle an ein zusätzliches Zugseil angekoppelt ist. Dieses Zugseil unterstützt die gleichförmige Bewegung der gesamten Ölbarriere, wobei der wesentliche Ölstrom zwischen der vorgeordneten Teilzelle und der abgesenkten wieder zugeordneten Teilzelle hindurchgeführt wird.

Einmal aus Entsorgungsgründen andererseits aber auch um entsprechend hohe Zugkräfte sicher aufnehmen zu können, ist es von Vorteil, wenn das Zugseil und das zusätzliche Zugseil als Glasfaserleine ausgebildet sind. Diese aus Glasfaserleine bestehenden Zugseile können zusammen mit der gesamten Ölbarriere entsorgt werden, beispielsweise nach dem das in der
Barriere enthaltene bzw. von ihr aufgenommene Öl über eine Presse herausgedrückt worden ist. Diese verbleibende Glasfasermasse kann dann einem Ofen zugeführt werden, um die Flamme zu unterstützen, wobei die sich daraus ergebende Asche im Prinzip nichts wie Sand ist.

Die Erfindung zeichnet sich insbesondere dadurch aus, daß eine Ölbarriere geschaffen ist, die aufgrund ihrer besonderen Ausbildung dafür Sorge trägt, daß die Ölbarriere sich nach wie vor voll Öl saugen kann und dabei durch die zugeordneten aus nicht hydrophobierten Material bestehende Teilzelle lagestabil gehalten wird. Diese mit Öl vollgesaugte Ölbarriere, die aus mehreren Teilzellen besteht, verhindert ein Überschwappen des Öls beim Einholen der Ölbarriere oder bei Windbelastung zweckmäßig dadurch, daß die aus mehreren Teilzellen bestehende Ölbarriere einen Spülkanal vorgibt, durch den das ölhaltige Wasser quasi im Kreise wieder in den verschmutzten Wasserbereich zurückgeführt wird. Dadurch kann ein Staudruck vermieden und gleichzeitig auch das Überschwappen von Öl über die Barriere verhindert werden. Gleichzeitig wird dadurch das Einholen der Ölbarriere wesentlich erleichtert.

Weitere Einzelheiten und Vorteile des Erfindungsgegenstandes ergeben sich aus der nachfolgenden Beschreibung der zugehörigen Zeichnung, in der bevorzugte Ausführungsbeispiele mit den dazu notwendigen Einzelheiten und Einzelteilen dargestellt sind. Es zeigen:
- Fig. 1: ein von einer Barriere umgebendes Überwachungs- oder Bergungsschiff, die oben auf dem Wasser aufschwimmt und das Reinwasser vom durch öl verschmutzten Wasser trennt,
- Fig. 2: einen Schnitt durch die aus mehreren Teilzellen bestehende Barriere,
- Fig. 3: eine weitere Ausbildung der Barriere im Schnitt und
- Fig. 4: eine dritte Ausführung der Barriere im Schnitt.

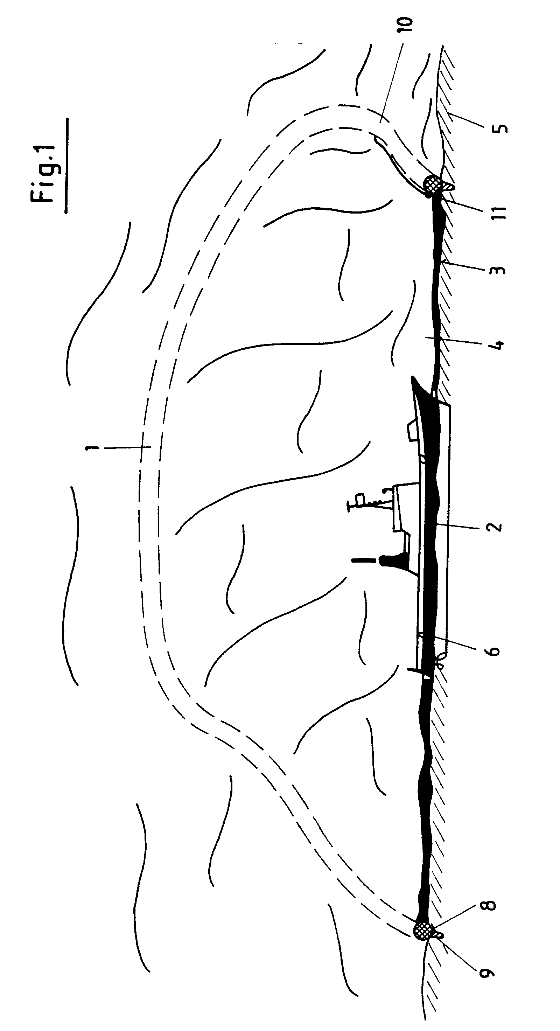

Fig. 1 zeigt den Bereich eines Meeresabschnittes, der teilweise durch Öl verschmutzt ist. Das verschmutzte Wasser wird über die Ölbarriere 1 vom noch reingebliebenen Wasser getrennt. Das Überwachungs- bzw. Bergungsschiff 2 schwimmt hier im verschmutzten Bereich, beispielsweise um das Öl 4 aufzunehmen und zu entsorgen.

Mit 3 ist die Wasseroberfläche bezeichnet, die wie schon gesagt in den reinen und den unreinen Bereich unterteilt ist, wobei es sich um Salz- oder auch Süßwasser 5 handeln kann.

Mit 6 ist eine angedeutete, dem Überwachungsschiff 2 zugeordnete Schleppvorrichtung 6 bezeichnet, über die die Barriere 1 eingeholt werden kann. Dies erfolgt über das der Barriere 1 zugeordnete Zugseil 11, das mit den einzelnen Teilzellen der Ölbarriere entsprechend verbunden ist.

Bei der aus Fig. 1 ersichtlichen Form ist nur eine aufschwimmende Teilzelle 8 und eine abgesenkte Teilzelle 9 zu erkennen, wobei die abgesenkte Teilzelle 9 als eine Art Schwert dient und sowohl eine Lagestabilität der Ölbarriere 1 ergibt. Gleichzeitig dient diese abgesenkte Teilzelle 9 bzw. das entsprechende Schwert dazu, ein Untenhindurchfließen des Öls 4 zu verhindern.

Die einzelnen Teilzellen 8, 9 sind von einem hier nicht im einzelnen wiedergegebenen Schlauch 10 umhüllt. Sie sind mit Glasfasern gefüllt, wobei die aufschwimmenden Teilzellen mit hydrophobierten Glasfasern und die abgesenkten Teilzellen mit nicht hydrophobierten Glasfasern gefüllt sind. Statt der Glasfasern können auch entsprechende Glasfasermatten hier verwendet werden. Vorteilhaft ist dabei, daß sich das Öl bzw. bei den nicht hydrophobierten Teilzellen 9 das Wasser an die Fasern anlagert, so daß eine wirksame Adsorbtion insbesondere des Öls oder der ölhaltigen Materialien gewährleistet ist.

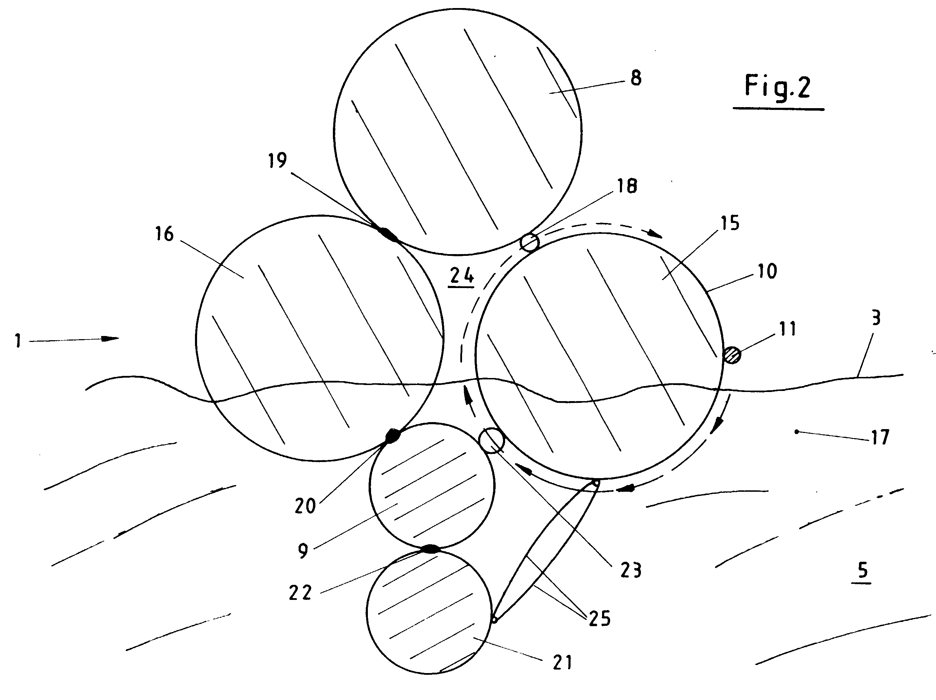

Fig. 2 zeigt die Ölbarriere 1 erfindungsgemäß erbaut im Schnitt. Deutlich erkennbar ist, daß insgesamt 3 aufschwimmende Teilzellen 8, 15, 16 vorgesehen sind. Diese aufschwimmenden Teilzellen 8, 15, 16 sind abgesenkt, d.h. mit nicht hydrophobiertem Material gefüllten Teilzellen 9, 21 verbunden. Die Teilzellen 8, 9, 16, 21 sind über Verbinder 19, 20, 22 öldicht miteinander verbunden, während die Teilzellen 8, 15 und 9, 15 schmutzwasserseitig 17 über Abstandshalter 18, 23 miteinander so verbunden sind, daß sich dazwischen ein Spülkanal 24 ergibt. Durch diesen Spülkanal wird das Öl 4 oder das ölhaltige Wasser in Richtung der wiedergegebenen Pfeile bewegt, so daß sich ein Druck in diesem Bereich nicht aufbauen kann. Dadurch ist ein Überschwappen des Öls 4 oder des ölhaltigen Wassers über die Gesamtbarriere 1 verhindert, wobei dieser Spülkanal 24 noch zusätzlich dadurch eine gezielte trichterförmige Öffnung erhält, weil die untere abgesenkte Teilzelle 21 über ein Halteseil 25 mit der vorgeordneten aufschwimmenden Teilzelle 15 in Verbindung steht.

Der schon erwähnte Staudruck könnte entstehen, wenn die Barriere 1 über das Zugseil 11 schmutzwasserseitig 17 gezogen wird, also in Richtung auf das hier nicht wiedergegebene Überwachungsschiff 2. Die Darstellung nach Fig. 2 macht sehr schön deutlich, daß hier Probleme nicht entstehen können und das durch das Verhindern eines Staudruckes der gesamte Bewegungsablauf wesentlich erleichtert ist.

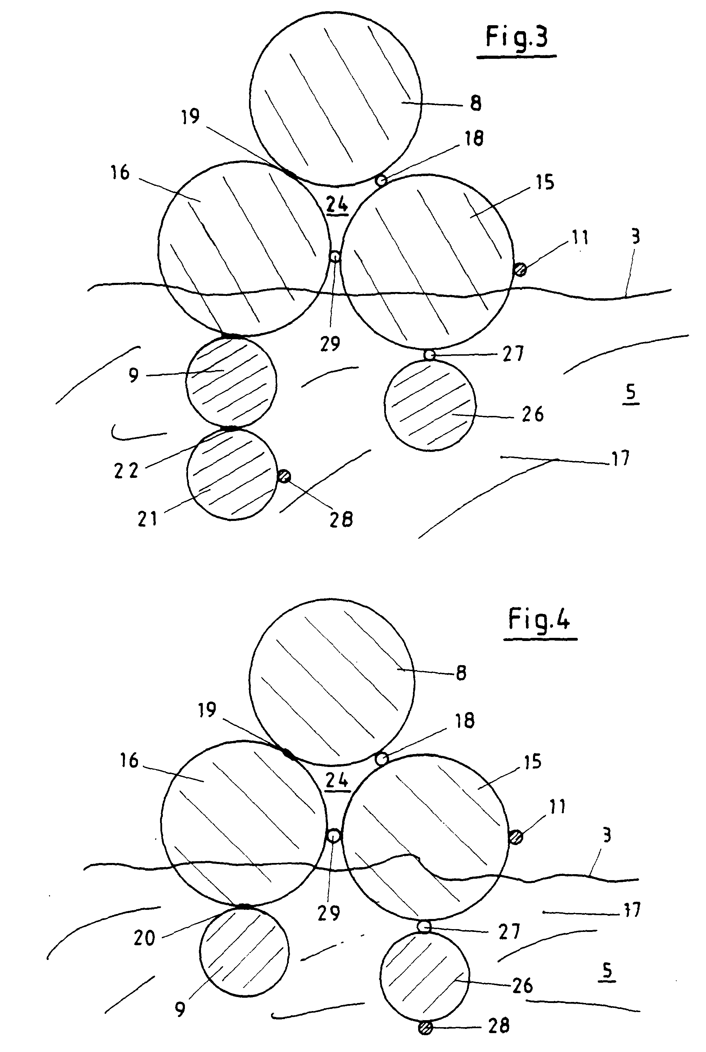

Fig. 3 und auch die Fig. 4 zeigen Ausführungsformen, bei denen die Ausbildung des Spülkanals 24 etwas variiert ist und zwar durch unterschiedliche Zuordnung von abgesenkten Teilzellen 9, 21 bzw. 26. Dabei ist hier zusätzlich zur Verbindung über einen Abstandshalter 18 die zweite aufschwimmende Teilzelle 16 über einen Abstandshalter 29 mit der aufschwimmenden vorgeordneten Teilzelle 15 verbunden, um so eine genaue Vorgabe des Spülkanals 24 zu erreichen. Weiter ist die weitere abgesenkte Teilzelle 26 über einen Abstandshalter 29 mit der aufschwimmenden vorgeordneten Teilzelle 15 verbunden, um hier eine entsprechende Führung des Öls beim Auftreten des Staudruckes zu gewährleisten.

Zusätzlich ist sowohl nach Fig. 3 wie nach Fig. 4 ein weiteres Zugseil 28 vorgesehen, das einmal dem tiefhängenden Schwert 13, 9 und 21 bzw. der weiteren abgesenkten Teilzelle 26 zugeordnet ist.

Alle genannten Merkmale, auch die den Zeichnungen allein zu entnehmenden, werden allein und in Kombination als erfindungswesentlich angesehen.

## Patentansprüche

1. Ölbarriere, die auf dem Wasser (5) zur Eindämmung von Öl (4) oder olähnlichen Stoffen aufschwimmt, bestehend aus auf dem Wasser (5) aufschwimmenden größeren Teilzellen (8, 16) aus hydrophobiertem Material und ins Wasser (5) eingetauchten kleineren Teilzellen (9) aus unbehandeltem oder hydrophil gemachtem und bezüglich der Barriere (1) lagerstabilisierend wirkendem Material, wobei die Teilzellen (8, 9, 16) aus Glasfasern bzw. Glasfasermatten und einem sie umhüllenden Schlauch (10) bestehen und unmittelbar oder über Zugseile (11) aneinander gekoppelt sind,
**dadurch gekennzeichnet,**
**daß** eine der größeren, aufschwimmenden Teilzellen (15) den weiteren größeren Teilzellen (8, 16) und den kleineren, ins Wasser (5) abgesenkten, öldicht aneinanderliegenden Teilzellen (8, 16; 9, 21) schmutzwasserseitig (17) vorgeordnet, am Zugseil (11) fixiert und über Abstandshalter (18, 23) einen Spülkanal (24) zwischen den aufschwimmenden und abgesenkten Teilzellen (8, 16, 9, 21) belassend mit ihnen verbunden ist.

2. Ölbarriere nach Anspruch 1,
**dadurch gekennzeichnet,**
**daß** zwei aufschwimmende Teilzellen (8, 16) und zwei abgesenkte Teilzellen (9, 21) gegenüber dem Öl abdichtend miteinander quasi eine Zeile bildend verbunden sind, während die vorgeordnete und ans Zugseil (11) angekoppelte Teilzelle (15) mit der oberen aufschwimmenden Teilzelle (8) und der oberen abgesenkten Teilzelle (9) über Abstandshalter (18, 23) in Verbindung steht.

3. Ölbarriere nach Anspruch 2,
**dadurch gekennzeichnet,**
**daß** das Zugseil (11) schmutzwasserseitig (17) an der vorgeordneten Teilzelle (15) festgelegt ist.

4. Ölbarriere nach Anspruch 2,
**dadurch gekennzeichnet,**
**daß** die untere abgesenkte Teilzelle (21) zusätzlich über ein verlängerbares Halteseil (25) mit der vorgeordneten Teilzelle (15) verbunden ist.

5. Ölbarriere nach Anspruch 1 - Anspruch 4,
**dadurch gekennzeichnet,**
**daß** die aufschwimmenden Teilzellen (8, 16) einen Durchmesser von 100 - 300 mm, vorzugsweise 150 mm und die abgesenkten Teilzellen (9, 23) einen Durchmesser von 50 - 150 mm, vorzugsweise 75 mm aufweisen.

6. Ölbarriere nach Anspruch 1 - Anspruch 5,
**dadurch gekennzeichnet,**
**daß** eine weitere abgesenkte Teilzelle (26) über Abstandshalter (27) mit der vorgeordneten Teilzelle (15) verbunden und ein weiteres Zugseil (28) an der unteren abgesenkten Teilzelle (21) angebracht ist, die ebenso wie die obere, abgesenkte Teilzelle (9) über keine Verbindung zur vorgeordneten Teilzelle (15) verfügt.

7. Ölbarriere nach Anspruch 1 - Anspruch 6,
**dadurch gekennzeichnet,**
**daß** zumindest die vorgeordnete, aufschwimmende Teilzelle (15) einen kreisrunden Querschnitt aufweist.

8. Ölbarriere nach Anspruch 1 - Anspruch 6,
**dadurch gekennzeichnet,**
**daß** die vorgeordnete, aufschwimmende Teilzelle (15) einen ovalen Querschnitt aufweist und mit der flacheren Seite auf dem Wasser (5) aufschwimmt.

9. Ölbarriere nach Anspruch 1 - Anspruch 5,
**dadurch gekennzeichnet,**
**daß** die obere und die untere aufschwimmende Teilzelle (8, 16) mit der vorgeordneten Teilzelle (15) über Abstandshalter (18, 29) verbunden sind, die beide eine angekoppelte abgesenkte Teilzelle (9, 26) aufweisen.

10. Ölbarriere nach Anspruch 9,
**dadurch gekennzeichnet,**
**daß** die der vorgeordneten Teilzelle (15) über einen Abstandshalter (27) zugeordnete abgesenkte Teilzelle (26) an ein zusätzliches Zugseil (28) angekoppelt ist.

11. Ölbarriere nach Anspruch 1 - Anspruch 10,
**dadurch gekennzeichnet,**
**daß** das Zugseil (11) und das zusätzliche Zugseil (28) als Glasfaserleine ausgebildet sind.

## Claims

1. Oil barrier which floats on the water (5) to stem oil (4) or oil-like substances, consisting of relatively large partial cells (8, 16) made of hydrophobised material floating on the water (5) and smaller partial cells (9) immersed in the water (5) made of untreated material or material which is rendered hydrophilic and acts in a manner providing stability in storage with respect to the barrier (1), the partial cells (8, 9, 16) consisting of glass fibres or glass fibre mats and a hose (10) surrounding them and being coupled directly or via traction cables (11) to one another, **characterised in that** one of the larger floating partial cells (15) connected upstream of the further larger partial cells (8, 16) and the smaller partial cells (8, 16; 9, 21) located adjacent to one another so as to be sealed from the oil and sunk into the water (5) on the polluted water side (17) is fixed to the traction cable (11) and is connected via distance pieces (18, 23) and in a manner so as to leave a rinsing channel (24) between the floating and sunken partial cells (8, 16, 9, 21), to these partial cells.

2. Oil barrier according to claim 1, **characterised in that** two floating partial cells (8, 16) and two sunken partial cells (9, 21) are connected to one another so as to more or less form a line and so as to be sealed from the oil, while the partial cell (15) arranged upstream and coupled to the traction cable (11) is connected to the upper floating partial cell (8) and the upper sunken partial cell (9) via distance pieces (18, 23).

3. Oil barrier according to claim 2, **characterised in that** the traction cable (11) is secured on the polluted water side (17) to the partial cell (15) connected upstream.

4. Oil barrier according to claim 2, **characterised in that** the lower sunken partial cell (21) is additionally connected via an extendable stay cable (25) to the partial cell (15) connected upstream.

5. Oil barrier according to claims 1 to 4, **characterised in that** the floating partial cells (8, 16) have a diameter of 100 to 300 mm, preferably 150 mm and the sunken partial cells (9, 23) a diameter of 50 to 150 mm, preferably 75 mm.

6. Oil barrier according to claims 1 to 5, **characterised in that** a further sunken partial cell (26) is connected via distance pieces (27) to the partial cell (15) arranged upstream and a further traction cable (28) is attached to the lower sunken partial cell (21) which like the upper sunken partial cell (9) is not connected to the partial cell (15) connected upstream.

7. Oil barrier according to claims 1 to 6, **characterised in that** at least the floating partial cell (15) arranged upstream has a circular cross-section.

8. Oil barrier according to claims 1 to 6, **characterised in that** the floating partial cell (15) connected upstream has an oval cross-section and floats on the water (5) with its flatter side.

9. Oil barrier according to claims 1 to 5, **characterised in that** the upper and lower floating partial cells (8, 16) are connected to the partial cell (15) connected upstream via distance pieces (18, 19) which both have a coupled sunken partial cell (9, 26).

10. Oil barrier according to claim 9, **characterised in that** the sunken partial cell (26) associated with the partial cell (15) connected upstream is coupled via a distance piece (27) to an additional traction cable (28).

11. Oil barrier according to claims 1 to 10, **characterised in that** the traction cable (11) and the additional traction cable (28) are designed as glass fibre cords.

## Revendications

1. Barrière de retenue de pétrole, qui flotte sur l'eau (5) pour retenir du pétrole (4) ou des substances analogues au pétrole, constituée par des cellules partielles (8, 16) d'une assez grande étendue, qui flottent sur l'eau (5) et sont réalisées en matériau rendu hydrophobe, et des cellules partielles plus petites (9) qui sont immergées dans l'eau (5) et sont réalisées en un matériau non traité ou rendu hydrophile et agissant avec un effet de stabilisation en rapport avec la barrière (1), les cellules partielles (8, 9, 16) étant constituées par des fibres de verre ou des mats de fibres de verre et par un tuyau (10), qui les entoure, et étant couplées entre elles directement ou par l'intermédiaire de câbles de traction (11), **caractérisée en ce que** l'une des cellules partielles flottantes les plus grandes (15) est disposée en avant des autres cellule partielles plus grandes (8, 16) et des cellules partielles plus petites (8, 16; 9, 21) abaissées dans l'eau (5) et tassées les unes contre les autres d'une manière étanche au pétrole, sur le côté de l'eau sale (17), est immobilisée sur le câble de traction (11) et est reliée aux autres cellule partielles par l'intermédiaire d'entretoises (18, 23) en laissant subsister un canal de balayage (24) entre les cellules partielles flottantes et les cellules partielles abaissées (8, 16, 9, 21).

2. Barrière de retenue de pétrole selon la revendication 1, **caractérisée en ce que** deux cellules partielles flottantes (8, 16) et deux cellules partielles abaissées (9, 21) sont reliées entre elles, d'une manière étanche vis-à-vis du pétrole, en formant quasiment une ligne, tandis que la cellule partielle (15), qui est disposée en avant et est couplée au câble de traction (11), est reliée à la cellule partielle supérieure flottante (8) et à la cellule partielle supérieure abaissée (9) par l'intermédiaire d'entretoises (18, 23).

3. Barrière de retenue de pétrole selon la revendication 2, **caractérisée en ce que** le câble de traction (11) est fixé, du côté de l'eau sale (17), à la cellule partielle disposée en avant (15).

4. Barrière de retenue de pétrole selon la revendication 2, **caractérisé en ce que** la cellule partielle inférieure abaissée (21) est reliée en outre par l'intermédiaire d'un câble de retenue prolongeable (25) à la cellule partielle disposée en avant (15).

5. Barrière de retenue de pétrole selon l'une des revendications 1 à 4, **caractérisée en ce que** les cellules partielles flottantes (8, 16) possèdent un diamètre de 100-300 mm, de préférence de 150 mm, et les cellules partielles abaissées (9, 23) possèdent un diamètre de 50-100 mm, de préférence 75 mm.

6. Barrière de retenue de pétrole selon l'une des revendications 1 à 5, **caractérisée en ce qu'**une autre cellule partielle abaissée (26) est reliée par l'intermédiaire d'entretoises (27) à la cellule partielle disposée en avant (15) et qu'un autre câble de traction (28) est disposé sur la cellule partielle inférieure abaissée (21), qui, de même que la cellule partielle supérieure abaissée (9), ne dispose d'aucune liaison avec la cellule partielle disposée en avant (15).

7. Barrière de retenue de pétrole selon l'une des revendications 1 à 6, **caractérisée en ce qu'**au moins la cellule partielle flottante disposée en avant (15) possède une section transversale circulaire.

8. Barrière de retenue de pétrole selon l'une des revendications 1 à 6, **caractérisée en ce que** la cellule partielle flottante disposée en avant possède une section transversale ovale et flotte avec son côté le plus plat sur l'eau (5).

9. Barrière de retenue de pétrole selon l'une des revendications 1 à 5, **caractérisée en ce que** la cellule partielle supérieure flottante et la cellule partielle inférieure flottante (8, 16) sont reliées à la cellule partielle disposée en avant (15) par l'intermédiaire d'entretoises (18, 29), qui possèdent toutes les deux une cellule partielle abaissée couplée (9, 26).

10. Barrière de retenue de pétrole selon la revendication 9, **caractérisée en ce que** la cellule partielle abaissée (26), qui est associée à la cellule partielle disposée en avant (15) par l'intermédiaire d'une entretoise (27), est couplée à un câble de traction supplémentaire (28).

11. Barrière de retenue de pétrole selon l'une des revendications 1 à 10, **caractérisée en ce que** le câble de traction (11) et le câble de traction supplémentaire (28) sont agencés sous la forme d'une corde formée de fibres de verre.
